# EUROPEAN PATENT SPECIFICATION

(11) **EP 0 527 797 B1**
(45) Date of publication and mention of the grant of the patent: **07.12.1994**
(21) Application number: 91908257.8
(22) Date of filing: 23.04.1991
(51) Int. Cl.: G01B 11/00

(54) **DEVICE FOR DETERMINATION OF THE TOPOGRAPHY OF A SURFACE**
VORRICHTUNG ZUM FESTSTELLEN DER FORM EINER OBERFLÄCHE
DISPOSITIF SERVANT A DETERMINER LA TOPOGRAPHIE D'UNE SURFACE

(30) Priority: 25.04.1990 NO 901831
(43) Date of publication of application: 24.02.1993
(73) Proprietor: METRONOR A/S, 1360 Nesbru (NO)
(72) Inventor: LINDQVIST, David, S-435 44 Mölnlycke (SE); PETTERSEN, Alf, N-1346 Gjettum (NO); ROTVOLD, Oyvind, N-1364 Hvalstad (NO)
(74) Representative: Singleton, Jeffrey
(86) International application number: NO9100063
(87) International publication number: WO9116598

(56) References cited:
- SE-B- 456 454

## Description

The present invention relates to a device for determination of the topography of a surface by measuring the normal vector of the surface point by point, as well as devices for determination of the surface curvature in the same points, and for determination of orientation, position, shape and size of holes in the surface.

The said devices are based on the use of opto-electronic sensors for measurement of spatial positions of active light sources, e.g. as described by two of the inventors (Pettersen and Røtvold) in Norwegian Patent Application no. 881579. An accessory tool allowing for marking measurement points on a surface, as well as for determination of the position of points hidden from the sensors, is previously developed by one of the inventors (Lindqvist), ref. Swedish Patent Publication no. 456454. The present invention relates to a further development of this accessory tool, as this now allows for point by point determination of the normal vector of the surface and possibly its curvature at these points, as well as position, shape, size and orientation of holes in the surface.

There is in industry a strong need to map the topography of surfaces. As an example this regards to automotive industry, where there is a need for quality control of manufactured, curved surfaces, and for digitization of model surfaces during the design process.

In relation to the use of Computer Aided Design systems the normal vector of the surface is very often used to the describe its shape. This gives valuable information in addition to coordinates of points on the surface. All known methods for surveying objects are based on measurements of coordinates of individual points. There are no known methods for direct, physical measurement of the normal vector point by point across a surface.

The present measurement techniques are to a large extent based on mechanical coordinate measurement machines, which only allow for determination of spatial coordinates of points on the surface. The normal vector has in such case to be derived from the coordinates of neighboring points. The same limitations are valid for all known systems based on non contact measurements e.g. by the use of video cameras and laser scanning, or conventional photogrammetry based on making photographs of marked points on an object or a surface.

It is an object of the present invention to supplement the coordinate values measured point by point by information on the surface normal vector and eventually its curvature in the same point. A measurement point can be freely chosen anywhere on the surface, or it can be defined by the edge of the surface. Furthermore it is an objective to completely describe holes in the surface or the object, by determination of the position, diameter and orientation of the holes.

The device is based on the use of movable sensors. This allows for surveying large objects without needing to transport them to a measurement laboratory. The said accessory tools can as well be used to determine the relation between the coordinate systems in question, i.e. the inner coordinate systems of the sensors, and the coordinate system of the object. Determination of these relations are based on photogrammetrical principles.

According to the present invention this is obtained by a probe comprising a body, a minimum of two light sources and three contact points or a plane contact surface, where the positions of said light sources are known relative to the contact points or the contact surface, in such a way that when measuring the spatial position (coordinates) of these light sources using said sensors, this gives the basis for calculating the coordinates of said contact points as well as the normal vector to the plane defined by the contact points or the contact surface.

According to the present invention probes are suggested that comprise two or three light sources. Furthermore various ways of designing the contact points or contact surface of the probe are suggested, and hence additionally to be able to determine the curvature of the surface, or the normal vector on the surface in points defined by the edge of the surface. Furthermore a special design of the probe is suggested to allow for determination of the position, orientation, shape and size of holes in the surface.

Further characteristic features are given in the subsequent patent claims, as well as in the following description of examples being non-limitative to the invention, with references to the accompanying drawings.
- Figure 1: illustrates a measurement scenario where two sensors and an accessory tool are used to determine the surface normal.
- Figure 2 a-b: illustrate the basic construction of the accessory tool, based on a plane contact surface.
- Figure 3 a-b: illustrate an accessory tool based on three contact pins.
- Figure 4 a-b: illustrate an accessory tool which in addition to the surface normal also give a direct measure of the curvature of the surface in the measurement point.
- Figure 5: illustrates a tool which gives the surface normal in a point defined by a hole in the surface, in addition a measure of the position and diameter of the hole.
- Figure 6: illustrates a tool for determination of the direction, position and diameter of a hole.
- Figure 7 a-c: illustrate tools for determination of the normal vector at the edge of a surface.

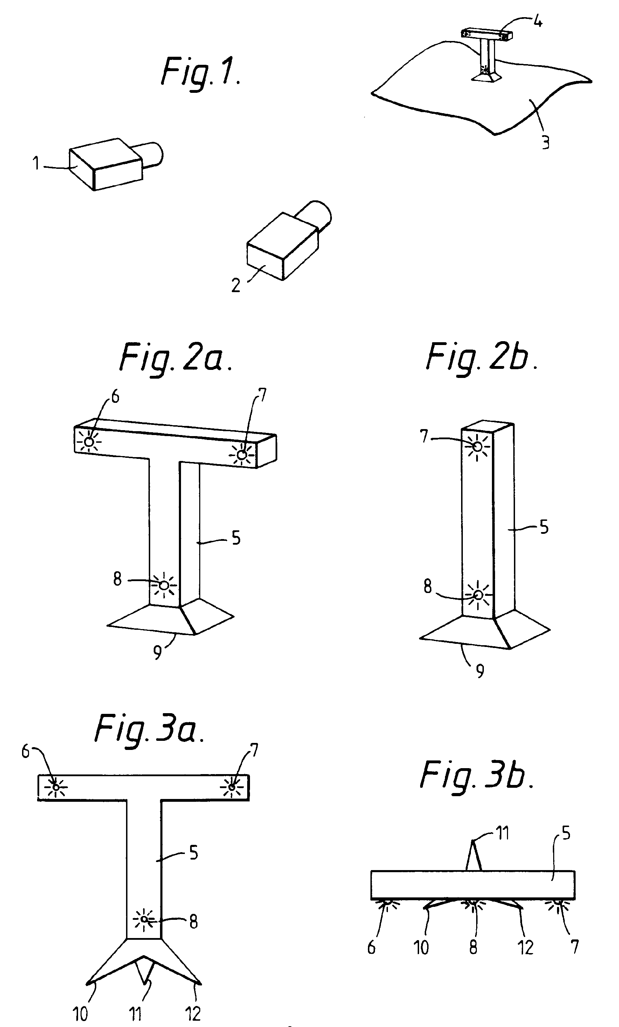

The use of a measurement device according to the present invention comprises positioning of two sensors 1, 2 for determination of positions of light sources or light spots located on a surface 3. The sensors may be of the kind described in Norwegian Patent Application 881579, or other light sensitive detectors. An accessory tool 4 is located in required position on the surface. The basic construction of the tool is shown in figures 2 a-b and 3 a-b. It consists of a body 5 with light sources 6-8 and a plane contact surface 9 (fig. 2) or three contact pins 10-12 (fig. 3). A probe having three light sources can for example have a T-shaped body (fig. 2 a, 3 a-b), having one light source mounted in each end of the lateral bar and one at the foot of the vertical pole. The use of three light sources is and advantage, as this give an unambiguous definition of the normal vector.

The measurement principle is that the two (or more) sensors register the position of the individual light sources. Based on the information on the position of the light sources on the tool, the position and orientation of the tool as a whole are calculated. As an example, photogrammetrical computational methods can be used for these calculation principles.

The minimum number of light sources is two, as shown in figure 2 b. This requires the two light sources 7-8 to be mounted on line parallel to or coinciding with the normal vector. If the positions of the light sources are known relative to the point where the line through the two light sources intersects the plane defined by the contact surface or the three contact points, this gives the basis for a calculation of the spatial coordinates of this point, in addition to the normal vector.

Using three or more light sources 6-8, these are allowed to be arbitrarily mounted relative to the contact points 10-12, given that the light sources are not located in a straight line. The position of the light sources have to be known relative to a local, tool fixed coordinate system. This local coordinate system will be defined by the position and orientation of the contact pins 10-12 or the contact surface 9. If the positions of the individual light sources are measured relative to a global or object fixed coordinate system, the position and orientation of the tool is calculated by a simple coordinate transformation.

The body 5 of the accessory tool does not need to be mounted normal to the contact surface 9 or the surface defined by the three contact pins 10-12. On the contrary, for many applications it will be advantageous to mount the body at an angle making it easier to get access to partially hidden surfaces.

By the use of the accessory tool the normal vector of the plane defined by the contact surface 9 or the contact pins 10-12 is determined. It is important that the size and shape of the contact surface or the distance between the contact pins is adapted to the curvature of the surfaces to be measured. If the surface is strongly curved within dimensions of the same order of magnitude as the distance between the contact pins, the surface normal will be undefined, or at best an average surface normal is measured.

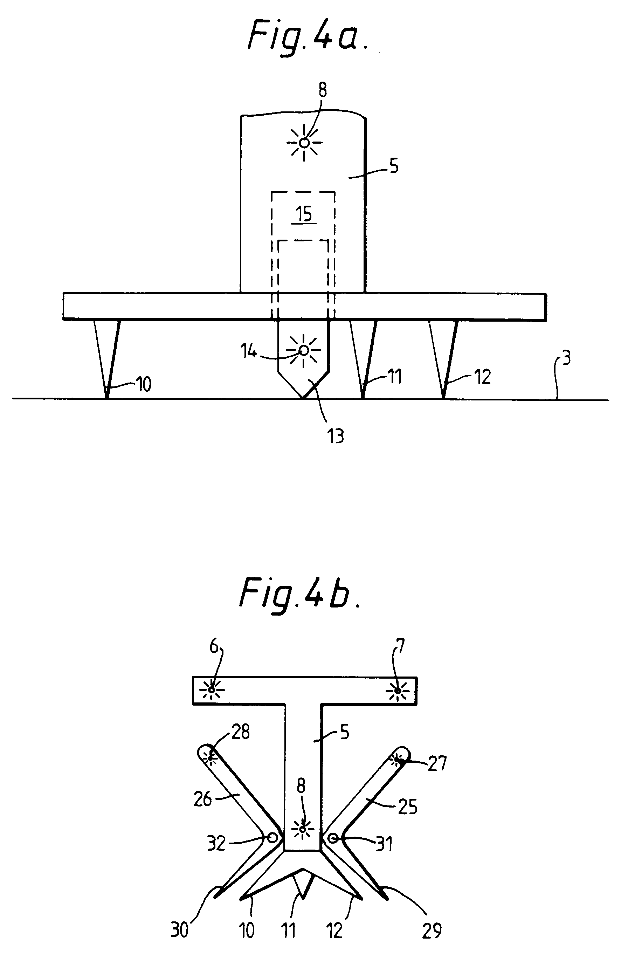

Figure 4 a-b illustrate tools which in addition to the surface normal also supply information on the surface curvature. In figure 4 a a fourth contact pin 13, which is free to move parallel to the normal to the surface defined by the pins 10-12, is mounted in a hole 15. A light source 14 is attached to the movable pin 13. The position of this light source 14, relative to the other light sources 6-8 gives the basis to calculate the curvature of the surface. The calculated curvature will be an average for the area limited by the three contact pins.

The same functionality would be achieved by having the pin 13 mounted fixed to the body 5 of the tool, by mounting the three contact pins 10-12 such that they can be moved parallel to the surface normal as one unit, and that the light source 14 is moved thereon.

In figure 4 b two arms 25-26 are attached to the tool body 5 by the use of rotary adapters 31-32. Light sources 27-28 are fixed to each of the arms. The surface is touched by the pins 29-30. The spring-loaded couplings 31-32 ensure that the contact pins are forced down against the surface. The position of the light sources 27-28 relative to the other light sources 6-8 give a measure of the surface curvature.

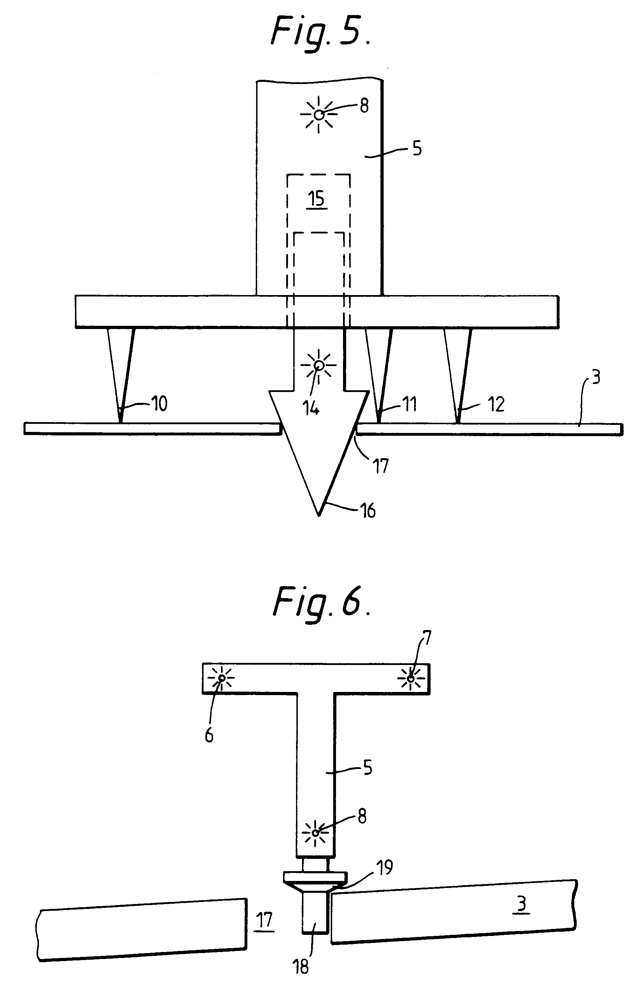

Figure 5 illustrates a variation of the tool of figure 4 a, developed to determine the surface normal in points given by a hole 17 in the surface 3. A conically shaped pin 16 is movable in the vertical direction within a hole 15. A light source 14 is attached to the pin. The position of this light source relative to the other light sources 6-8 shows how deep into the hole 17 the pin 16 penetrates. If the shape of the pin is known this is a basis to calculate the diameter of the hole in addition to the center of the hole. As explained above the same effect would be achieved by the use of a fixed pin 16, if the three pins 10-12 where mounted together along the vertical axis.

The tool for determination of hole diameter as described above is restricted to circular holes in thin surfaces. Figure 6 illustrates a tool which can be used to determine the orientation, position, diameter and shape of the hole 17. The pin is in this case shaped like a cylinder 18. This cylinder is held adjacent the edge of the hole at a minimum of three different positions. A rom 19 is mounted on the top of the cylinder 18 such that the depth within the hole 17 is well defined.

The longitudinal axis of the cylinder 18 intersects the plane defined by the rim 19 in a well defined point. The positions of the light sources 6-8 are known relative to this point. In the case of circular holes 17 drilled normally into the surface 3, three measurement positions are sufficient to determine the position (center), orientation and diameter of the hole. The measurements give the spatial coordinates of three points on a circle having its center in the center of the hole, and having a diameter equal to the diameter of the hole minus the diameter of the cylinder. This is valid even if the orientation of the hole is not normal to the surface, such that the intersection between the hole and the surface is an ellipse. If, on the other hand, the hole has an ellipse shape, a minimum of four measurement points are needed.

The suggested cylindrically shaped accessory tool for hole determination can be replaced by a tool having another shape, e.g. having a well defined edge touching the side of the hole. The essential features are that the tool has a well defined contact surface or line such that the tool is naturally positioned parallel to the center axis of the hole, and that the contact surface or line is known and well defined relative to the positions of the light sources.

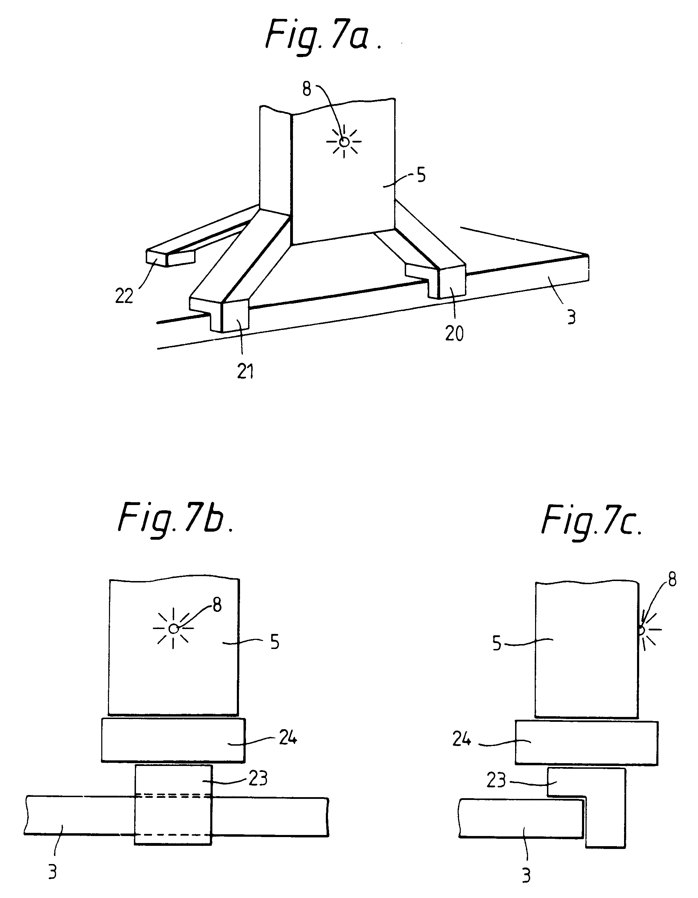

There is often a special need for the surface normal at the edge of a surface 3, or along feature lines or cuts in the surface. In figure 7 a it is shown how the three contact pins 20-22 can be designed to determine the surface normal in a well defined distance from the edge of the surface. In figures 7 b-c the three contact pins are replaced by one contact surface 23. This surface is mounted to the body 5 of the accessory tool by the use of a rotary coupling 24. This enables the use of the same tool around the outer edge of the complete surface, as the body and light sources of the tool always can be directed towards the sensors of the measurement system.

An example of the need for a determination of the surface normal at the edge of a surface, is in relation to the requirements in the automotive industry with respect to flush between the car body parts. This implies that for instance the edges of the mounted hood and fenders should be in flush. The same is valid for example for the transition between the fender and the door. By the use of a tool as shown in figure 7, measures both of the surface normals of the two surfaces are achieved, as well as their relative level through the coordinates of the respective contact points being known. Conventional coordinate measurement machines have proved to be useless for this application, as the use of such instruments would require a large number of measurement points, and fitting to mathematical surfaces there-through.

In the above a number of tools are suggested. All are built up from the same body 5 and light sources 6-8. A practical universal tool will be designed such that this part can be applied together with a number of differently shaped, replaceable contact surfaces and pins.

## Claims

1. A device for the determination of the topography of a surface wherein the normal vector of the surface is measured point by point, said device comprising:
- a probe comprising a body (5), a minimum of two light sources (6-8) and three contact points (10-12) or a plane contact surface (9), wherein the positions of said light sources are known relative to the contact points or the contact surface,
- a minimum of two sensors which determine the spatial position (coordinates) of said light sources,
- means for calculating on the basis of said spatial position of said light sources, the coordinates of said contact points or the orientation of the contact surface, as well as the normal vector of the plane defined by the contact points or the contact surface.

2. A device as claimed in claim 1, wherein:
- said two light sources (7-8) are attached to the probe, both being mounted such that a line through said two light sources is parallel to the normal vector of the plane defined by said contact points (10-12) or plane contact surface (9).

3. A device as claimed in claim 1, wherein:
- three light sources (10-12) are attached to the probe, mounted in arbitrary positions, however such that all three light sources are not located along a straight line, and that the positions of the light sources are known relative to said contact points (10-12) or plane contact surface (9).

4. A device as claimed in claim 3, wherein:
- a fourth contact point (13) is mounted to the probe in addition to said three contact points (10-12) and in the center of these, said fourth contact point being movable in a direction normal to the plane described by said three fixed contact points, and a light source (14) is attached to this fourth contact point such that by determining the position of this light source relative to the other light sources the curvature of the surface can be calculated.

5. A device as claimed in claim 1, wherein:
- the contact surface (23), or one or two of the three contact points (20-22) is designed such that the probe can be located in a well defined position relative to the edge of the surface, to determine the surface normal thereat.

6. A device as claimed in claim 1, wherein:
- a guiding means (16) is mounted in relation to the contact surface or the three contact points to enable centering in a hole.

7. A device as claimed in claim 6, wherein:
- said guiding means (16) is conically shaped with a light source (14) attached thereto, such that by determining the position of this light source the hole diameter, in addition to the center position and orientation of the hole, may be calculated.

8. A device as claimed in claim 1, wherein:
- the contact surface of the probe is designed either as a cylinder (18) having a known diameter and a contact rim (19), or having one or more known contact edges (23), which enable positioning thereof in a hole, said contact edges being parallel to the center axis of the hole wherein said contact edges have known position and orientation relative to the light sources of the probe, such that by letting the contact surface touch the side of the hole at a minimum of three positions, and by determining the positions of the light sources, the basis is being made up for a calculation of the position, diameter and orientation of the hole.

## Patentansprüche

1. Ein Gerät zur Bestimmung der Topographie einer Oberfläche, in dem der Normalvektor der Oberfläche Punkt für Punkt vermessen wird, wobei das besagte Gerät umfaßt:
- eine Sonde, die einen Körper (5), ein Minimum von zwei Lichtquellen (6-8) und drei Kontaktpunkte (10-12) oder eine ebene Kontaktoberfläche (9) umfaßt, in der die Positionen der besagten Lichtquellen bezüglich der Kontaktpunkte oder der Kontaktoberfläche bekannt sind,
- ein Minimum von zwei Sensoren, die die räumliche Position (Koordinaten) der besagten Lichtquellen bestimmen,
- Mittel, um basierend auf der besagten räumlichen Position der besagten Lichtquellen die Koordinaten der besagten Kontaktpunkte oder die Orientierung der Kontaktoberfläche sowohl wie den Normalvektor der Ebene, der durch die Kontaktpunkte oder durch die Kontaktoberfläche definiert wird, zu berechnen.

2. Ein Gerät nach Anspruch 1, wobei:
die besagten beiden Lichtquellen (7-8) an der Sonde befestigt werden und wobei beide so montiert werden, daß eine Linie durch die besagten beiden Lichtquellen parallel zu dem Normalvektor der Ebene ist, der durch die besagten Kontaktpunkte (10-12) oder die ebene Kontaktoberfläche (9) definiert wird.

3. Ein Gerät nach Anspruch 1, wobei:
- drei Lichtquellen (10-12) an der Sonde befestigt und in willkürlichen Positionen montiert sind, wobei diese jedoch so montiert sind, daß alle drei Lichtquellen nicht entlang einer geraden Linie lokalisiert sind und daß die Positionen der Lichtquellen bezüglich der besagten Kontaktpunkte (10-12) oder der ebenen Kontaktoberfläche (9) bekannt sind.

4. Ein Gerät nach Anspruch 3, wobei:
- ein vierter Kontaktpunkt (13) an der Sonde zusätzlich zu den besagten drei Kontaktpunkten (10-12) montiert wird, und wobei der besagte vierte Kontaktpunkt in dem Zentrum von diesen in einer Richtung senkrecht zu der Ebene, die von den besagten drei festen
Kontaktpunkten beschrieben wird, bewegbar ist, und
wobei eine Lichtquelle (14) so an diesem vierten Kontaktpunkt befestigt ist, daß durch die Bestimmung der Position dieser Lichtquelle mit Bezug auf die anderen Lichtquellen die Krümmung der Oberfläche berechnet werden kann.

5. Ein Gerät nach Anspruch 1, wobei:
- die Kontaktoberfläche (23) oder einer oder zwei von den drei Kontaktpunkten (20-22) so ausgebildet sind, daß die Sonde in einer gut definierten Position mit Bezug auf den Rand der Oberfläche lokalisiert werden kann, um die Normale der Oberfläche daran zu bestimmen.

6. Ein Gerät nach Anspruch 1, wobei:
- ein Führungsmittel (16) im Hinblick auf die Kontaktoberfläche oder die drei Kontaktpunkte montiert ist, um das Zentrieren in einem Loch zu ermöglichen.

7. Ein Gerät nach Anspruch 6, wobei:
- das besagte Führungsmittel (16) von konischer Form ist mit einer Lichtquelle (14) derart daran befestigt, daß durch die Bestimmung der Position dieser Lichtquelle der Durchmesser des Loches zusätzlich zu der zentralen Position und der Orientierung des Loches berechnet werden kann.

8. Ein Gerät nach Anspruch 1, wobei:
- die Kontaktoberfläche der Sonde entweder als ein Zylinder (18) ausgebildet ist, der einen bekannten Durchmesser und einen Kontaktrand (19) besitzt, oder eine Kontaktkante oder mehrere bekannte Kontaktkanten (23) besitzt, die ihr Positionieren in einem Loch ermöglichen, wobei die besagten Kontaktkanten parallel zu der zentralen Achse des Loches sind, wobei die besagten Kontaktkanten eine bekannte Position und Orientierung bezüglich der Lichtquellen der Sonde besitzen, sodaß dadurch, daß man die Kontaktoberfläche die Seite des Loches an einem Minimum von drei Positionen berühren läßt und daß die Positionen der Lichtquellen bestimmt werden, die Grundlage für eine Berechnung der Position, des Durchmessers und der Orientierung des Loches geschaffen wird.

## Revendications

1. Dispositif pour la détermination de la topographie d'une surface dans lequel le vecteur de la normale de la surface est mesuré point par point, ledit dispositif comprenant:
- une sonde comprenant un corps (5), un minimum de deux sources de lumière (6-8) et trois points de contact (10-12) ou une surface de contact plane (9), dans laquelle les positions desdites sources de lumière relativement aux points de contact ou à la surface de contact sont connues,
- un minimum de deux capteurs qui déterminent la position spatiale (les coordonnées) desdites sources de lumière,
- un moyen pour calculer en fonction deladite position spatiale desdites sources de lumière, les coordonnées desdits points de contact ou l'orientation de la surface de contact, ainsi que le vecteur de la normale du plan défini par les points de contact ou la surface de contact.

2. Dispositif selon la revendication 1, dans lequel:
- lesdites deux sources de lumière (7-8) sont attachées à la sonde, les deux étant montées de sorte qu'une ligne traversant lesdites deux sources de lumière est parallèle au vecteur de la normale du plan défini par lesdits points de contact (10-12) ou de la surface de contact plane (9).

3. Dispositif selon la revendication 1, dans lequel:
- trois sources de lumière (10-12) sont attachées à la sonde, montées à des positions arbitraires, mais toutefois de sorte que toute les trois sources de lumière ne soient pas situées le long d'une ligne droite, et que les positions des sources de lumière relativement auxdits points de contact (10-12) ou surface de contact plane (9) sont connues.

4. Dispositif selon la revendication 3, dans lequel:
- un quatrième point de contact (13) est monté sur la sonde en plus desdits trois points de contact (10-12) et au centre de ceux-ci, ledit quatrième point de contact étant mobile dans un sens perpendiculaire au plan décrit par lesdits trois points de contact fixes, et une source de lumière (14) est attachée à ce quatrième point de contact de sorte qu'en déterminant la position de cette source de lumière relativement aux autres sources de lumière la courbure de la surface peut être calculée.

5. Dispositif selon la revendication 1, dans lequel:
- la surface de contact (23), ou un ou deux des trois points de contact (20-22) est conçu de sorte que la sonde peut être située dans une position bien définie relativement au bord de la surface, pour y déterminer la normale de la surface.

6. Dispositif selon la revendication 1, dans lequel:
- un moyen de guidage (16) est monté par rapport à la surface de contact ou des trois points de contact pour permettre le centrage dans un trou.

7. Dispositif selon la revendication 6, dans lequel:
- ledit moyen de guidage (16) est de forme conique avec une source de lumière (14) attachée sur celui-ci, de sorte qu'en déterminant la position de cette source de lumière le diamètre du trou, en plus de la position centrale et de l'orientation du trou, peut être calculé.

8. Dispositif selon la revendication 1, dans lequel:
- la surface de contact de la sonde est conçue soit comme un cylindre (18) ayant un diamètre connu et un rebord de contact (19), soit ayant un ou plusieurs bords de contact connus (23), ce qui permet le positionnement de celle-ci dans un trou, lesdits bords de contact étant parallèles à l'axe central du trou dans lequel lesdits bords de contact ont une position et une orientation connues relativement aux sources de lumière de la sonde, de sorte qu'en laissant la surface de contact toucher le côté du trou à un minimum de trois positions, et en déterminant les positions des sources de lumière, la base est fournie pour un calcul de la position, du diamètre et de l'orientation du trou.
